Europäisches Patentamt

European Patent Office

Office européen des brevets

(11) Publication number: 0 044 357
B1

(12) EUROPEAN PATENT SPECIFICATION

(45) Date of publication of patent specification: 06.03.85

(21) Application number: 80200718.7

(22) Date of filing: 23.07.80

(51) Int. Cl.⁴: H 02 G 11/02, B 65 H 75/34

(54) Satellite reel.

(43) Date of publication of application:
27.01.82 Bulletin 82/04

(45) Publication of the grant of the patent:
06.03.85 Bulletin 85/10

(84) Designated Contracting States:
BE CH DE FR GB IT LI SE

(56) References cited:
CA-A-1 041 977
DE-B-1 110 711
FR-A- 576 849
FR-A-2 076 865
FR-A-2 351 408
GB-A- 872 612
GB-A- 909 001
NL-A-7 900 609
US-A-3 128 857
US-A-3 545 693

(73) Proprietor: Ir. H.M.W. Croese Raadgevend
Ingenieursbureau B.V.
Schiedamseweg 103
NL-3134 BE Vlaardingen (NL)

(72) Inventor: Croese, Hendrik Magchiel Willem
Schiedamseweg 103
NL-3134 BE Vlaardingen (NL)

(74) Representative: Urbanus, Henricus Maria, Ir.
et al
c/o Vereenigde Octrooibureaux Nieuwe
Parklaan 107
NL-2587 BP 's-Gravenhage (NL)

Courier Press, Leamington Spa, England.

## Description

The invention relates to a reel, suitable for the intermediate storage or provisional retention of a variable cable length between a stationary end and a movable end of a cable, said reel comprising a central drum which is stationary mounted and is fitted with a connection to an axial cable passage for a stationary cable end and at least two satellite drums, each having the same diameter as the central drum and are rotatable about the central drum and simultaneously forcibly about their own axis so as to wind or unwind the cable onto or from the central drum, said cable simultaneously travelling over the satellite drums, which are fitted in their surfaces with a helical cable receiving groove. An example of such a reel is disclosed in Canadian patent CA—A—1041977.

With reels that are arranged between a stationary apparatus, e.g. a measuring or control station on the one end and a movable apparatus, for instance a measuring probe or a remote control apparatus on the other end, twisting of the cable during rotation of the reel should be avoided.

In the case of hydraulic lines use is sometimes made of a rotary fluid clutch with a stationary portion and a portion that is rotatable relative thereof, while suitable seals are disposed between said portions. The stationary portion of such so-called rotary seals or swivels is connected to stationary apparatus e.g. a fluid source, while the rotary portion is connected to the reel. Analogous constructions are known for pneumatic lines and also in fibre optics. In case of an electric conductor use is made of slider contacts, whereby for each core a carbon brush is connected to the non-rotary apparatus, e.g. a measuring station for the portal of a mobile crane, while for each core there is mounted a slip ring in corotational relationship with the reel.

With a small number of fluid lines or cores per cable the prior art aids will be sufficient. Use may even be made of a plug connection which is released during reel rotations. However this may entail difficulties if constantly a specific fluid pressure or electric tension has to be maintained in the cable.

Substantial problems however occur in case of more complex cables, such as cables that are composed of a plurality of fluid lines or electric conductors or combinations thereof. For instance in case of mobile transport installations it is mostly necessary to not only continue to supply continuous electric power but often also other electric connections should be maintained continuously for the control, locking, communication, measurement of lifted weights or of transported quantities and the like. Not only that the practical constructive possibilities impose a restriction on the possible number of slip rings, but often these electric connections also appear unreliable by the variations in the transition resistance of the slip ring constructions. Another example is to be found in seismic operations at sea where use may be made of a measuring probe which is kept at a variable distance from a ship by means of a float and which, by means of a cable comprising many electric cores and/or hydraulic lines, enclosed by a jacket, is connected to a computer on the ship. The length of this cable is frequently changed, for instance for adaptation to the local circumstances or for maintenance operations at the measuring probe. For preventing twisting, which is naturally unallowable for such cables, prior art aids, such as the above mentioned rotary clutches or slip contacts are deficient, partly since polluted rings excessively affect the measuring signals mostly indicated in millivolts and in so far as it is necessary during the taking-in of the measuring probe to arrange the cable on the deck somehow, e.g. in loops or to suspend same. Since this has to be done very carefully, the taking-in and letting out of a measuring probe is time consuming and will mostly take various hours.

Many of the drawbacks of known storage systems are eliminated by the reel disclosed in Canadian patent CA—A—1.041.977. In this known reel a cable, the stationary end of which is guided through the radial and the axial passage in the central drum, can be wound up by rotation of the satellite drums about the central drum, while the cable is supplied tangentially to the satellite drums. Because the central drum is stationary no twist occurs. The winding up of the central drum is effected from one of the satellite drums, the central drum being filled from one end thereof. Simultaneously the cable is wound about the assembly of satellite drums, so that by means of a reel of comparatively small overall dimensions a comparatively large cable length can be coiled. A disadvantage of this known reel is related to the fact that the overall configuration of the reel is more or less angular, in case of four satellite drums square, with the result that a length of cable fed to the reel with a constant velocity, causes the reel, which is biased in the winding direction, to rotate with a velocity which fluctuates four times per revolution between a maximum and a minimum. It follows that the couple imposed on the reel by its drive, will fluctuate as well. Therefore there is a risk of winding a length of cable on the central drum in an irregular and uncontrolled manner with the possibility of shifting of windings along the central drum surface.

According to the subject invention this disadvantage can be eliminated by a central drum which is fitted with a cable receiving groove extending helically over the drum surface and having the same pitch as that of the satellite drums, however oppositely directed, the arrangement being such that the adjacently disposed portions of the grooves of the respective drums substantially fittingly enclose those parts of the cable between them. In such a reel the cable laid over a part of the circumference of the central drum, will be positively placed in the said helically take up groove which is thus filled from one end of the drum in a regular manner guaranteeing accurate functioning of the reel.

The accurate positioning of the cable in the groove of the central drum by means of a satellite drum is only possible if, as stated in the above, the adjacently disposed portions of the respective grooves can always take up the parts of the cable between them and fittingly enclose those parts between them. In other words the opposite helices of the central drum on the one end and of all satellite drums on the other end, during the uncoiling of the satellite drums about the central drum, should always remains accurately aligned with each other.

One embodiment wherein this can be simply ensured constructively is that in which the central drum and the satellite drums are provided at their head with identical coacting gears, the satellite drums being rotatably mounted in a cage rotatable about the centre line of the central drum and which, upon rotation of the cage roll the planet gears of the satellite drums over the sun gears of the central drum so that the satellite drums are rotated about their own axis.

At any rate in case of heavy cables it is not the intention that the reel provides the pulling force for the taking in of the cable. In otherwise known manner there may consequently be provided a two-side cable pulling device which is adapted to supply the cable to the reel, respectively adapted to draw the cable therefrom, as well as a light motor constantly loading the cage in the winding direction. In case the cable is supplied to the reel, the motor will ensure the winding up and in case the cable is drawn from the reel, then the reel drives the motor back.

An important favourable aspect of the reel according to the invention is the fact that the cable is not only supplied, respectively discharged at one level, top or bottom of the track of the satellite drums but also in the same axial zone. For during the coiling of the cable, the exterior cable winding on the assembly satellite drums will be automatically advanced while the exterior winding is completed and vice versa.

A reel according to the invention having four satellite drums, has a capacity increase of more than 25% is attained in comparison with a conventional, single drum.

One embodiment of the satellite reel according to the invention will now be explained, by way of example, with reference to the accompanying drawing, wherein

Fig. 1 is a diagrammatic side of view of the reel, partly in cross-section on the line I—I in Fig. 2, and

Fig. 2 is a cross-section on the line II—II in Fig. 1.

According to the drawing a central drum 1, via trunnions 2a, 2b, a sleeve 2c and locking means 3a and 3b, is stationary mounted in lateral supports 4 resting on a baseplate 5. On trunnion 2a and sleeve 2c there is rotatably mounted a cage 6 by means of a light hydromotor 7 and a rope 8. The cage 6 is composed of end plates 9 and 10, which are mutually coupled by rods 11. In cage 6 four satellite drums 12a—d are rotatably mounted. Each satellite drum is fitted with a planet gear 14a—d fixedly connected thereto by means of screws 13 and the central drum 1 is fitted with a sum gear 15 fixedly connected thereto.

The diameters of the drums 1, 12a—d are identical and the gears 15, 14a—d are identical.

In the face of the central drum there is formed a helical cable-receiving groove 16 which via a radial cable passage 17 is in communication with an axial cable passage 17'. The groove 16 extends over the drum according to a left-hand helix with pitch S.

In the face of each of the satellite drums 12a—d there is formed a cable-receiving groove 18a—d having the same pitch S as the groove 16, however according to a right-hand helix and the drums 1, 12—d are so interconnected via the respective gears 15, 14a—d that, irrespective of the rotation position of the cage 6, the adjacently disposed portions of the groove 16 on the one hand and grooves 18a—d on the other hand, substantially fittingly enclose cable lengths disposed in situ.

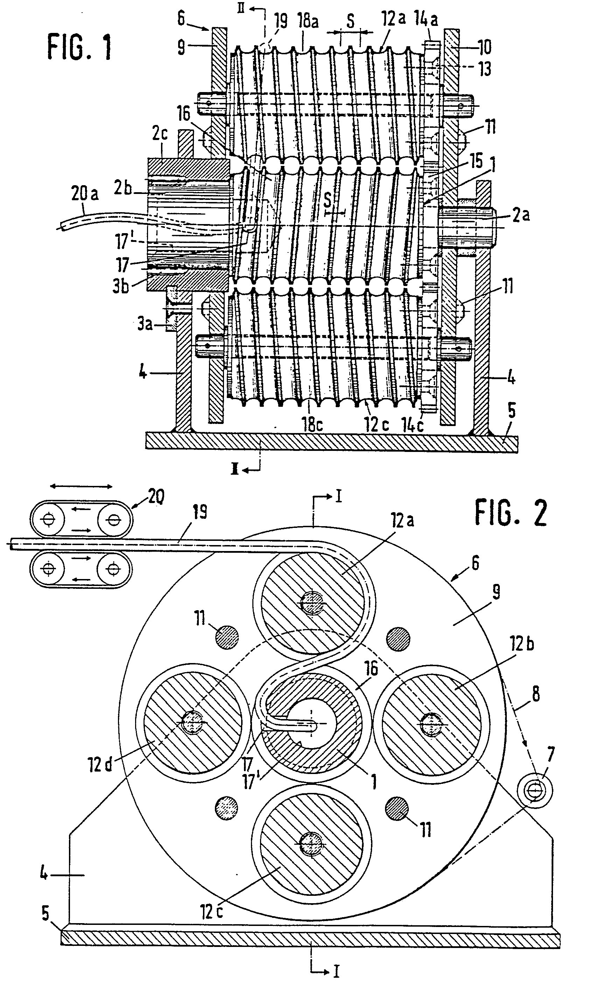

In particular it appears from Fig. 2 in what manner a cable 19 supplied by a cable pulling device 20 is wound about drum 12a and is conducted, via the groove portion disposed in Fig. 1 at the back of said drum, to the central drum 1. The end 20a of the cable is conducted through the passage 17 and 17' and may be connected to a stationary device. For winding up the cable the reel in Fig. 2 is turned clockwise so that it is wound about the assembly of satellite drums 12a—d. Simultaneously, via the satellite drum 12a the groove 16 of the stationary central drum 1 is filled, thus forming two windings, viz. one external winding over the assembly of satellite drums and one internal winding on the central drum without occurence of cable twist.

**Claim**

A reel, suitable for the intermediate storage of provisional retention of a variable cable length (20) between a stationary end (20a) and a movable end (20) of a cable, said reel comprising a central drum (1) which is stationary mounted and is fitted with a connection (17) to an axial cable passage (17') for a stationary cable (20a) and at least two satellite drums (12a—d), each having the same diameter as the central drum (1) and are rotatable about the central drum (1) and simultaneously forcibly about their own axis so as to wind or unwind the cable (20) onto or from the central drum, said cable simultaneously travelling over the satellite drums, which are fitted in their surfaces with a helical cable receiving groove (12a—d), characterized in that said central drum (1) is fitted with a cable receiving groove (16) extending helically over the drum surface and having the same pitch (S) as that of the satellite drums (12a—d), however oppositely directed, the arrangement being such that the adjacently disposed portions of the grooves of the respective drums substantially fittingly enclose those parts of the cable (20) between them.

## Patentanspruch

Kabeltrommel für die Zwischenspeicherung oder vorübergehende Aufnahme einer veränderlichen Kabellänge (20) zwischen einen festehenden Ende (20a) und einem beweglichen Ende (20) eines Kabels, mit einer feststehend montierten und mit einem Durchlaß (17) zu einem axialen Kabeldurchgang (17') für ein feststehendes Kabelende (20a) versehenen zentralen Trommel (1) und mindestens zwei Satellitentrommeln (12a—d), die den gleichen Durchmesser wie die zentrale Trommel (1) aufweisen und um die zentrale Trommel (1) und gleichzeitig zwangsweise um ihre eigenen Achsen drehbar sind, um das Kabel auf die zentrale Trommel (1) aufzuwickeln oder davon abzuwickeln, wobei das Kabel (20) gleichzeitig über die Satellitentrommeln läuft, die in ihren Oberflächen mit einer schraubenförmigen Kabelaufnahmenut (12a—d) versehen sind, dadurch gekennzeichnet, daß die zentrale Trommel (1) eine schraubenförmig über die Trommeloberfläche verlaufende Kabelaufnahmenut (16) aufweist, die eine gleichgroße jedoch entgegengesetzt gerichtete Steigung (S) wie die Satellitentrommeln (12a—d) besitzt, wobei die Anordnung so getroffen ist, daß die einander benachbarten Teile der Nuten der jeweiligen Trommeln die zwischen ihnen gelegenen Abschnitte des Kabels (20) im wesentlichen dicht umschließen.

## Revendication

Un touret, approprié pour le stockage intermédiaire ou maintien provisoire d'une longueur de câble variable (20) entre une extrémité fixe (20a) et une extrémité mobile (20) du câble, ledit touret comprenant un tambour central (1) qui est monté fixe et est équipé d'un raccord (17) à un passage de câble axial (17') pour un câble fixe (20a) et au moins deux tambours satellites (12a—d), ayant chacun le même diamètre que le tambour central (1) et tournant autouour du tambour central (1) et simultanément de force autour de leur propre axe de façon à enrouler ou dérouler le câble (20) autour du tambour central, ledit câble passant simultanément au-dessus des tambours satellites, ayant à leurs surfaces une gorge (12a—d) pour recevoir le câble enroulé en hélice, caractérisé par le fait que ledit tambour central (1) a une gorge (16) pour recevoir le câble s'étendant hélicoïdalement au-dessus de la surface du tambour et ayant le même pas (S) que celui des tambours satellites (12a—d), toutefois dans une direction opposée, disposés de telle façon que les parties voisines des gorges des tambours respectifs enserrent effectivement et de façon appropriée ces parties du câble (20) entre elles.

FIG. 1

FIG. 2